# EUROPÄISCHE PATENTANMELDUNG

(11) **EP 4 693 180 A1**
(43) Veröffentlichungstag der Anmeldung: **11.02.2026**
(21) Anmeldenummer: 24193318.3
(22) Anmeldetag: 07.08.2024
(51) Int. Cl.: G06T 7/11, G06V 20/64

(54) **VERFAHREN ZUM ZUORDNEN VON DATENPUNKTEN ZU JEWEILS EINEM VON MEHREREN OBJEKTEN**

(71) Anmelder: dSPACE GmbH, 33102 Paderborn (DE)
(72) Erfinder: Hanselmann, Harald, 76227 Karlsruhe (DE); Both, Fabian, 76137 Karlsruhe (DE); Marrakchi, Yassine, 76227 Karlsruhe (DE); Darwin, Oscar, 76227 Karlsruhe (DE); Weber, Michael, 76227 Karlsruhe (DE); Romanski, Simon, 76131 Karlsruhe (DE)

(57) **Zusammenfassung**

Die Erfindung betrifft ein computerimplementiertes Verfahren zum Zuordnen von Datenpunkten von ersten Daten (26) zu jeweils einem von mehreren Objekten (14, 14'), wobei die ersten Daten (26) wenigstens drei Raumdimensionen umfassen, und das Verfahren den folgenden Schritt umfasst:
- Bilden von den jeweiligen Objekten (14, 14') zugeordneten Gruppen von projizierten Datenpunkten (18, 18') unter Berücksichtigung von empfangenen Informationsdaten von zweidimensionalen umgebenden Polygonen (10, 10') und von einer Tiefen-Klasse (20, 20') des Datenpunktes mittels eines Zuordnungsverfahrens dergestalt, dass bei sich überlappenden Polygonen (10, 10'), bei denen projizierte Datenpunkte (18, 18') sich innerhalb von mehr als einem zweidimensionalen umgebenden Polygon (10, 10') befinden, die Gruppen derart gebildet werden, dass keine Tiefen-Klasse (20, 20') gleichzeitig mehreren der sich überlappenden Polygonen (10, 10') zugewiesen wird.

Zudem betrifft die Erfindung eine Vorrichtung zur Datenverarbeitung umfassend Mittel zur Ausführung des obigen Verfahrens sowie ein Computerprogrammprodukt, umfassend Befehle, die bei der Ausführung des Programms durch einen Computer diesen veranlassen, das obige Verfahren auszuführen.

Weiterhin betrifft die Erfindung einen computerlesbaren Datenträger, auf dem das obige Computerprogrammprodukt gespeichert ist.

## Beschreibung

Die Erfindung betrifft ein computerimplementiertes Verfahren zum Zuordnen von Datenpunkten von ersten Daten zu jeweils einem von mehreren Objekten.

Zudem betrifft die Erfindung eine Vorrichtung zur Datenverarbeitung umfassend Mittel zur Ausführung des obigen Verfahrens.

Weiterhin betrifft die Erfindung ein Computerprogrammprodukt, umfassend Befehle, die bei der Ausführung des Programms durch einen Computer diesen veranlassen, das obige Verfahren auszuführen.

Ferner betrifft die Erfindung einen computerlesbaren Datenträger, auf dem das obige Computerprogrammprodukt gespeichert ist.

Autonomes und Teilautonomes Fahren hat das Potenzial die Mobilität zu verändern und beispielsweise Reisezeiten, Energieverbrauch und/oder Emissionen zu reduzieren. Als wichtige Komponente für autonomes Fahren hat die 3D-Objekterkennung große Aufmerksamkeit erhalten, und Ansätze zur 3D-Objekterkennung, die auf maschinellem Lernen basieren haben in den letzten Jahren an Popularität gewonnen.

Bestehende Ansätze zur 3D-Objekterkennung lassen sich im Prinzip in zwei Gruppen einteilen, je nachdem, ob es sich bei den Ausgangsdaten um zweidimensionale Bilddaten handelt oder um dreidimensionale Punktwolken, die in der Regel durch LiDAR-Sensoren generiert werden. Bei Verfahren, die auf durch Kameras erfassten Bilddaten basieren, stellt das Schätzen des 3D-Hüllkörpers für ein Objekt aus zweidimensionalen Bilddaten eine große Herausforderung dar. Aufgrund der rasanten Entwicklung im Bereich des maschinellen Lernens und insbesondere bei Deep-Learning-Technologien, hat die bildbasierte 3D-Erkennung allerdings bemerkenswerte Fortschritte erzielt.

Ein Nachteil an der bildbasierte 3D-Erkennung mittels maschinellen Lernens ist allerdings, dass ein statistischer Algorithmus mit sehr vielen Lerndaten trainiert werden muss, was aufwändig ist. Zudem können Algorithmen zur 3D-Objekterkennung, die auf maschinellem Lernen basieren auch sehr rechenintensiv sein, was diese Verfahren ineffizient machen kann. Dies ist insbesondere problematisch, wenn große Datenmengen verarbeitet werden müssen, wie es im Bereich der Datenannotation vorkommt. Annotierte Daten weisen beispielsweise eine Bounding-Box um ein 3D-Objekt auf und/oder weisen ein Label dahingehend auf, dass es sich bei dem 3D-Objekt um ein Fahrzeug handelt. Annotierte Daten werden beispielsweise verwendet, wenn Algorithmen, wie neuronalen Netzwerken, im Rahmen des überwachten Lernens mit großen Datensätzen trainiert werden sollen. Die Bereitstellung annotierten Daten ist bisher mit großem und teils manuellem Aufwand verbunden, was sehr zeit- und kostenintensiv ist.

Davon ausgehend ist es die Aufgabe der Erfindung, auf eine einfache, schnelle, und/oder kostengünstige Weise eine 3D-Objekterkennung zu ermöglichen.

Diese Aufgabe wird durch den Gegenstand der Hauptansprüche gelöst. Bevorzugte Weiterbildungen finden sich in den Unteransprüchen.

Erfindungsgemäß wird also ein computerimplementiertes Verfahren zum Zuordnen von Datenpunkten von ersten Daten zu jeweils einem von mehreren Objekten bereitgestellt, wobei die ersten Daten wenigstens drei Raumdimensionen umfassen, mit den Schritten
- Empfangen von Informationsdaten von zweidimensionalen umgebenden Polygonen, bevorzugt von zweidimensionalen umgebenden Rechtecken, für die auf zweiten Daten dargestellten Objekten, wobei die zweiten Daten wenigstens zwei Raumdimensionen umfassen, wobei die empfangenen Informationsdaten eine Größe und eine Position des umgebenden Polygons des jeweiligen Objektes in den zweiten Daten definieren,
- Empfangen einer Projektionsmatrix, wobei die Projektionsmatrix eine Abbildung eines dreidimensionalen Datenpunktes der ersten Daten auf einen zweidimensionalen Datenpunkt in den zweiten Daten definiert,
- Generieren von projizierten Datenpunkten durch projizieren der dreidimensionalen Datenpunkte der ersten Daten mittels der empfangenen Projektionsmatrix,
- Einteilen der projizierten Datenpunkte und/oder der dreidimensionalen Datenpunkte in Tiefen-Klassen aufgrund eines jeweiligen Tiefenwertes des dreidimensionalen Datenpunktes,
- Bilden von den jeweiligen Objekten zugeordneten Gruppen von projizierten Datenpunkten unter Berücksichtigung der empfangenen Informationsdaten der zweidimensionalen umgebenden Polygone und der Tiefen-Klasse des Datenpunktes mittels eines Zuordnungsverfahrens dergestalt, dass bei sich überlappenden Polygonen, bei denen projizierte Datenpunkte sich innerhalb von mehr als einem zweidimensionalen umgebenden Polygon befinden, die Gruppen derart gebildet werden, dass keine Tiefen-Klasse gleichzeitig mehreren der sich überlappenden Polygonen zugewiesen wird.

Das erfindungsgemäße Verfahren ist in anderen Worten also ein Verfahren zum Bilden von Clustern von Datenpunkten der ersten Daten, wobei die Cluster auf Grundlage der Projektion der dreidimensionalen Daten in zwei Raumdimensionen, unter Berücksichtigung der zweidimensionalen umgebenden Polygonen und der Tiefen-Klasse der Datenpunkte, bevorzugt Rechtecken, der zweiten Daten ermittelt werden. Ein Aspekt der Erfindung ist insbesondere, dass jedem Polygon eine Tiefen-Klasse zugewiesen wird und insbesondere, dass die Gruppen - sprich die Cluster - bei sich überlappenden Polygonen nicht einzeln für jedes Polygon gefunden werden, sondern mittels einer Gesamtschau gefunden werden.

Durch das Verfahren werden die projizierten Datenpunkte der ersten Daten zu jeweils einem Cluster zugeordnet, wobei jeder Cluster ein Objekt repräsentiert. Auf Basis der Zuordnung wird ermöglicht, dass ein dreidimensionaler Hüllkörper, bevorzugt ein konvexer Hüllkörper, und besonders bevorzugt ein Quader, für das auf den ersten Daten dargestellten Objekt ermittelt werden kann. Die ersten Daten weisen wenigstens drei Raumdimensionen auf, so dass sich im Prinzip das Objekt durch Auftragen der ersten Daten in einem dreidimensionalen Raster visualisieren lässt. Die jeweiligen Werte eines Datenpunktes für die drei Raumdimensionen werden auch als Raumkoordinaten (x, y, z) bezeichnet.

Im ersten Schritt des Verfahrens werden die Informationsdaten des zweidimensionalen umgebenden Polygons, und bevorzugt des zweidimensionalen umgebenden Rechteckes empfangen. Bevorzugt handelt es sich beim zweidimensionalen umgebenden Rechteck um ein achsenparalleles Rechteck (englisch: *Axis Aligned Bounding Box*, AABB) des Objektes auf den zweiten Daten. Die zweiten Daten umfassen wenigstens die zwei Raumdimensionen. Somit lässt sich das auf den zweiten Daten dargestellte Objekt also durch Auftragen der zweiten Daten in einem zweidimensionalen Raster bevorzugt bildlich darstellen. Die jeweiligen Werten eines Datenpunktes für die zwei Raumdimensionen werden auch als Bildkoordinaten (x, y) bezeichnet.

Die zweidimensional umgebenden Polygone umschließen jeweils ein auf den zweiten Daten dargestelltes Objekt vollständig. In anderen Worten befindet sich also für jedes Objekt kein zu dem Objekt gehöriger Datenpunkt der zweiten Daten außerhalb des jeweiligen Polygons. Das zweidimensionale umgebenden Polygon und bevorzugt das AABB wird durch seine Informationsdaten, die die Größe, besonders bevorzugt die Länge der zwei Seiten des Rechteckes, und die Position, besonders bevorzugt die Bildkoordinaten eines Punktes, beispielsweise eines Eckpunktes oder der Mitte des Rechteckes, in den zweiten Daten spezifizieren, definiert. Insbesondere ist es bei mehreren Objekten möglich, dass sich die zweidimensionalen umgebenden Polygone überschneiden, oder ein Polygon sich gänzlich innerhalb eines anderen Polygons befindet, beispielsweise wenn die auf den zweiten Daten dargestellten Objekte sich anteilig verdecken. Stellen beispielsweise die zweiten Daten eine Fahrzeugkolonne dar, werden in der Regel einige Bereiche der Rückseite der Fahrzeuge am Kolonnenanfang von jenen Fahrzeugen, die sich fahrtrichtungstechnisch direkt hinter diesen Fahrzeugen befindenden, verdeckt.

Die ersten Daten und die zweiten Daten stellen bevorzugt die gleichen Objekte dar. Bevorzugt stellen die ersten und die zweiten Daten die gleichen Objekte zum im wesentlichen gleichen Zeitpunkt dar. Die ersten Daten und die zweiten Daten sind also bevorzugt miteinander zeitlich korreliert. Vorliegend bedeutet zum wesentlich gleichen Zeitpunkt bzw. zeitlich korreliert bevorzugt, dass ein Aufnahmezeitpunkt der zweiten Daten - also derjenigen Daten, die wenigstens zwei Raumdimensionen aufweisen - zwischen einem Anfangsaufnahmezeitpunkt und einem Endaufnahmezeitpunkt der ersten Daten liegt, also derjenigen Daten, die wenigstens drei Raumdimensionen aufweisen.

In einem weiteren Schritt des Verfahrens wird die Projektionsmatrix empfangen. Die Projektionsmatrix definiert die mathematische Abbildung eines dreidimensionalen Datenpunktes der ersten Daten auf einen zweidimensionalen Datenpunkt in den zweiten Daten. Durch Anwenden der Projektionsmatrix auf die Raumkoordinaten wird also eine Bildkoordinate generiert.

In einem weiteren Schritt des Verfahrens werden die projizierten Datenpunkte generiert, indem die dreidimensionalen Datenpunkte der ersten Daten mittels der empfangenen Projektionsmatrix projiziert werden. Die projizierten Datenpunkten sind also demnach zweidimensionale Datenpunkte.

In einem weiteren Schritt des Verfahrens werden die projizierten Datenpunkte und/oder die dreidimensionalen Datenpunkte in Tiefen-Klassen eingeteilt, und zwar aufgrund des jeweiligen Tiefenwertes der dreidimensionalen Datenpunkte. In anderen Worten wird also bevorzugt die Häufigkeitsverteilung der Tiefenwerte der ursprünglichen dreidimensionalen Datenpunkte betrachtet. Bildlich gesprochen wird also durch Einteilung der projizierten Datenpunkte und/oder der dreidimensionalen Datenpunkte in die Tiefen-Klassen - englisch: *bins* - ein Histogramm gebildet.

Im darauffolgenden Schritt werden die Gruppen der projizierten Datenpunkte gebildet, und zwar unter Berücksichtigung der empfangenen Informationsdaten der zweidimensionalen umgebenden Polygone und der Tiefen-Klasse des Datenpunktes - also der Häufigkeitsverteilung der Tiefenwerte. Dies erfolgt mittels des Zuordnungsverfahrens dergestalt, dass bei sich überlappenden Polygonen, bei denen projizierte Datenpunkte sich innerhalb von mehr als einem zweidimensionalen umgebenden Polygon befinden, die Gruppen derart gebildet werden, dass keine Tiefen-Klasse gleichzeitig mehreren der sich überlappenden Polygonen zugewiesen wird. Ein Aspekt der Erfindung ist also, dass jedem Polygon eine Tiefen-Klasse zugewiesen wird und insbesondere, dass diese Zuweisung bei sich überlappenden Polygonen nicht einzeln für jedes Polygon gefunden wird, sondern eine Gesamtschau durchgeführt wird.

In einer Situation, indem keine sich überlappenden Polygonen vorhanden sind, ist bevorzugt vorgesehen, dass die Gruppen von projizierten Datenpunkten gebildet werden, indem für diejenigen projizierten Datenpunkte, die sich innerhalb eines jeweiligen Polygons befinden, die Einteilung der projizierten Datenpunkten und/oder der dreidimensionalen Datenpunkte in die Tiefen-Klassen derart berücksichtigt wird, dass dem jeweiligen Polygon diejenige Tiefen-Klasse zugewiesen wird, die ein Maximum aufweist. In anderen Worten wird also für die projizierten Datenpunkten, die innerhalb des Polygons liegen die Häufigkeitsverteilung der Tiefenwerte betrachtet und dem jeweiligen Polygon diejenige Tiefen-Klasse zugewiesen, die in der Häufigkeitsverteilung des entsprechenden Polygons ein Maximum aufweist.

Bei sich überlappenden Polygonen, und demnach bei projizierten Datenpunkten, die sich innerhalb von mehr als einem zweidimensionalen umgebenden Polygon befinden, wird wie bereits erwähnt, durch das Zuordnungsverfahren sichergestellt, dass die Gruppen derart gebildet werden, dass keine Tiefen-Klasse gleichzeitig mehreren der sich überlappenden Polygonen zugewiesen wird. Dies erfolgt bevorzugt, indem zunächst die sich überlappenden Polygone zu einem Gesamtpolygon zusammengeführt werden, weiter bevorzugt, indem die sich überlappenden Polygone zum Gesamtpolygon vereinigt werden.

Bevorzugt werden dann die Gruppen von projizierten Datenpunkten gebildet, indem für diejenigen projizierten Datenpunkte, die sich innerhalb des Gesamtpolygons befinden, die Einteilung der projizierten Datenpunkten und/oder der dreidimensionalen Datenpunkte in die Tiefen-Klassen derart berücksichtigt wird, dass jedem einzelnen Polygon des Gesamtpolygons jeweils eine Tiefen-Klasse zugewiesen wird, ohne dass dabei eine Tiefen-Klasse gleichzeitig mehreren der sich überlappenden Polygonen zugewiesen wird. Bevorzugt findet durch das Zuordnungsverfahren also ein *Matching* zwischen den verfügbaren Tiefen-Klassen und den Polygonen statt. Weiter bevorzugt ist vorgesehen, dass es sich um ein gewichtetes Zuordnungsverfahren handelt, bei dem durch die Zuordnung der Tiefen-Klassen zu den Polygonen die Summe der zu den einzelnen Polygonen zugeordneten, projizierten Datenpunkte maximiert wird.

Das Verfahren hat insbesondere den Vorteil, dass es wenig rechenintensiv und somit äußerst ressourcenschonend und effizient ist. Somit eignet sich das Verfahren besonders um schnell große Datenmengen zu verarbeiten.

Gemäß einer bevorzugten Weiterbildung der Erfindung ist vorgesehen, dass es sich bei den ersten Daten um eine mittels eines Lidar- oder Radar- Sensors aufgezeichnete Punktwolke handelt. Die ersten Daten sind also bevorzugt dünnbesetzte Daten, da der Lidar- oder Radarsensor lediglich an wenigen diskreten Raumkoordinaten einen Wert aufzeichnet.

Gemäß einer bevorzugten Weiterbildung der Erfindung ist vorgesehen, dass es sich bei den zweiten Daten um mittels einer Kamera aufgezeichnete Bilddaten handelt. Besonders bevorzugt ist vorgesehen, dass die Projektionsmatrix unter anderem durch die Orientierung und die Position des zur Aufzeichnung der ersten Daten verwendeten Sensors zur Kamera, sowie durch die Brennweite der Kamera definiert ist.

Im Prinzip ist es möglich, dass die empfangenen Informationsdaten des zweidimensionalen umgebenden Polygons durch manuelle Annotation der mittels der Kamera aufgezeichneten Bilddaten generiert werden. Bevorzug ist allerdings vorgesehen, dass die durch die Kamera aufgezeichnete Bilddaten mittels maschinellen Lernens ausgewertet werden und derart das zweidimensionale Polygon und bevorzugt das AABB ermittelt wird. In diesem Zusammenhang ist gemäß einer weiteren bevorzugten Weiterbildung der Erfindung vorgesehen, dass der Schritt Empfangen von Informationsdaten des zweidimensionalen umgebenden Polygons ein Empfangen von Informationsdaten eines zweidimensionalen minimal umgebenden Polygons, und bevorzugt eines zweidimensionalen minimal umgebenden Rechteckes, und ein Skalieren des minimal umgebenden Polygons um einen Faktor größer 1 und bevorzugt kleiner gleich 1,5 umfasst und/oder dass der Schritt Empfangen von Informationsdaten des zweidimensionalen umgebenden Polygons ein Empfangen von Informationsdaten eines um einen Faktor größer 1 und bevorzugt kleiner gleich 1,5 skaliertes zweidimensional minimal umgebenden Polygons umfasst. Bevorzugt ist der Faktor kleiner gleich 1,3 und besonders bevorzugt kleiner gleich 1,2.

Bevorzugt handelt es sich beim zweidimensionalen minimal umgebenden Polygon um ein achsenparalleles Rechteck (AABB). Bevorzugt berührt das Objekt alle vier Seiten des zweidimensionalen minimal umgebenden Rechteckes. Es gibt für ein kompaktes - sprich abgeschlossenes und beschränktes 2D-Objekt genau ein minimales AABB. Dieses ist das kleinstmögliche achsenparallele Rechteck, das das Objekt einschließt. Das minimale AABB kann beispielsweise über eine Minimums- und Maximumssuche über Koordinaten aller Eckpunkte des Objektes in den zweiten Daten ermittelt werden. Es hat sich gezeigt, dass das Verfahren bessere Ergebnisse liefert, wenn das minimal umgebende Polygon etwas vergrößert wird, um gewisse Ungenauigkeiten beispielsweise in der Projektionsmatrix zu berücksichtigen, da derart auch projizierte Datenpunkte, die leicht außerhalb des minimal umgebenden Polygons mitberücksichtigt werden.

Im Prinzip ist es möglich, dass eine Klassenbreite - englisch: *bin width* - der Tiefen-Klasse für unterschiedliche Tiefenklassen unterschiedlich ist. Bevorzugt ist allerdings vorgesehen, dass der Schritt Einteilen der projizierten Datenpunkten und/oder der dreidimensionalen Datenpunkte in Tiefen-Klassen aufgrund des jeweiligen Tiefenwertes des dreidimensionalen Datenpunktes, ein Einteilen der projizierten Datenpunkten und/oder der dreidimensionalen Datenpunkte in Tiefen-Klassen mit gleichartiger Klassenbreite umfasst. Dies macht das Verfahren besonders einfach. Weiter bevorzugt ist vorgesehen, dass die Klassenbreite abhängig von der Anzahl an Polygonen in den zweiten Daten - sprich von der Anzahl an empfangenen Informationsdaten der zweidimensionalen umgebenden Polygone ist. Bevorzugt wird eine geringe Klassenbreite gewählt, bei vielen Polygonen und eine große Klassenbreite bei wenigen Polygonen.

Grundsätzlich ist es möglich, dass das Bilden von den jeweiligen Objekten zugeordneten Gruppen von projizierten Datenpunkten mittels eines Brute-Force-Verfahrens erfolgt, bei dem alle möglichen Zuordnungen von Tiefen-Klassen zu Polygonen ausprobiert werden. Dies ist allerding rechenintensiv. Gemäß einer bevorzugten Weiterbildung der Erfindung ist stattdessen vorgesehen, dass der Schritt Bilden von den jeweiligen Objekten zugeordneten Gruppen von projizierten Datenpunkten unter Berücksichtigung der empfangenen Informationsdaten der zweidimensionalen umgebenden Polygone und der Tiefen-Klasse des Datenpunktes mittels der Ungarischen Methode erfolgt. Die Ungarische Methode auch Kuhn-Munkres-Algorithmus genannt ist ein Algorithmus zum Lösen von gewichteten Zuordnungsproblemen, der sehr effizient ist.

Gemäß einer bevorzugten Weiterbildung ist zudem vorgesehen, dass der Schritt Bilden von den jeweiligen Objekten zugeordneten Gruppen von projizierten Datenpunkten unter Berücksichtigung der empfangenen Informationsdaten der zweidimensionalen umgebenden Polygone und der Tiefen-Klasse des Datenpunktes ein Bilden von Gruppen dergestalt umfasst, dass kein projizierter Datenpunkt gleichzeitig mehreren Gruppen zugewiesen wird. Bevorzugt handelt es sich in anderen Worten bei dem Verfahren also um ein strikt partitionierendes Clustering oder um ein strikt partitionierendes Clustering mit Ausreißern, wobei die Datenpunkte der ersten Daten bzw. die projizierten Datenpunkte nicht mehreren Clustern zugehörig sein können.

Wie bereits erwähnt wird jedem Polygon eine Tiefen-Klasse zugewiesen. In diesem Zusammenhang ist gemäß einer weiteren bevorzugten Weiterbildung vorgesehen, dass das Verfahren den Schritt Zuordnen einer Distanzinformation, und bevorzugt genau einer Distanzinformation, zu den jeweils gebildeten Gruppen umfasst. Die zugeordnete Distanzinformation kann bevorzugt zum Ermitteln eines dreidimensionalen Hüllkörpers für das auf den ersten Daten dargestellte Objekt verwendet werden.

Im Prinzip ist es möglich, dass es sich bei der zugewiesenen Distanzinformation um den Mittelwert der dem Polygon zugewiesenen Tiefen-Klasse handelt. Bei einer Tiefenklasse mit beispielsweise einer Breite von 5 m bis 6 m wäre die zugewiesene Distanzinformation also beispielsweise 5,5 m. Gemäß einer bevorzugten Weiterbildung der Erfindung ist allerdings vorgesehen, dass der Schritt Zuordnen der Distanzinformation zu den jeweils gebildeten Gruppen ein Bilden eines Mittelwertes über die jeweiligen Tiefenwerte der dreidimensionalen Datenpunkte der den jeweiligen Objekten zugeordneten Gruppe umfasst. In anderen Worten wird also der Mittelwert der Tiefenwerte über diejenigen dreidimensionalen Datenpunkten gebildet, die jener Tiefen-Klasse zugeordnet sind, die dem Polygon zugeordnet wurde. Dieser Mittelwert wird dann bevorzugt als Distanzinformation dem Polygon zugewiesen.

In diesem Zusammenhang ist gemäß einer weiteren bevorzugten Weiterbildung der Erfindung vorgesehen, dass der Schritt Zuordnen der Distanzinformation zu den jeweils gebildeten Gruppen ein Addieren eines von einem Klassifizierungsergebnisses des Objektes abhängigen Vorwissens-Terms umfasst, und das Verfahren bevorzugt den Schritt Empfangen eines Klassifizierungsergebnisses des Objektes umfasst.

In Bezug zu den ersten Daten werden Objekte aufgrund ihrer Eigenverschattung (englisch: *self occlusion*) nur auf Flächen vom Sensor abgetastet, die in Richtung des Sensors ausgerichtet sind. In anderen Worten fehlen in den ersten Daten also quasi Datenpunkte vom Objekt, die weiter vom Sensor entfernt liegen. Wenn die auf Basis des beschriebenen Verfahrens gefundene Distanzinformation für einen Schwerpunkt eines dreidimensionalen Hüllkörpers verwendet wird, kann dies aufgrund der fehlenden Datenpunkte zu einem systematischen Fehler führen. Um diesen Fehler auszugleichen ist bevorzugt vorgesehen, dass der Vorwissens-Term zur Distanzinformation addiert wird. Bevorzugt werden im ersten Schritt des Verfahrens also nicht lediglich die Informationsdaten des umgebenden Polygons empfangen, sondern auch ein Klassifizierungsergebnis des vom Polygon umfassten auf den zweiten Daten dargestellten Objektes.

Gemäß einer weiteren bevorzugten Weiterbildung der Erfindung ist vorgesehen, dass das Verfahren den Schritt Ermitteln eines dreidimensionalen Hüllkörpers, bevorzugt eines Quaders, für die auf den ersten Daten dargestellten Objekten unter Berücksichtigung der gebildeten Gruppen, bevorzugt der zugeordneten Distanzinformation, und der empfangenen Informationsdaten der zweidimensionalen umgebenden Polygone umfasst.

Der dreidimensionale Hüllkörper ist bevorzugt durch seine Größe, die Position und die Orientierung des Hüllkörpers in den ersten Daten definiert. Bei einem Quader ist die Größe bevorzugt durch die Länge der drei Seiten des Quaders, die Position bevorzugt durch die Raumkoordinaten eines Punktes, beispielsweise eines Eckpunktes oder des Schwerpunktes des Quaders, und die Orientierung, besonders bevorzugt durch drei Winkel, beispielsweise die Roll-Nick-Gier-Winkel, spezifiziert. Besonders bevorzugt wird die der Gruppe zugeordneten Distanzinformation als eine Raumkoordinate für die Position des dreidimensionalen Hüllkörpers verwendet. Die weiteren zwei Raumkoordinaten der Position des dreidimensionale Hüllkörpers ergeben sich bevorzugt aus den entsprechenden Bildkoordinaten des Polygons in den zweiten Daten.

Weiter bevorzugt wird in Bezug zur Größe des dreidimensionalen Hüllkörpers auf eine von der Klasse des Objektes abhängige vordefinierte Größenverteilungen und besonders bevorzugt Gaußverteilungen der Größe zurückgegriffen. Beispielsweise wird für Kleinwagen eine erste vordefinierten Größenverteilung verwendet und/oder für Lastwagen eine zweite vordefinierte Größenverteilung. Im Prinzip lässt sich die Größe von Objekten, insbesondere Fahrzeugen, durch Gaußsche-Mischmodelle beschreiben. Ein Mischmodell ist ein Modell zur Darstellung des Vorhandenseins von Teilpopulationen innerhalb einer Gesamtpopulation.

Gemäß einer weiteren bevorzugten Weiterbildung der Erfindung ist vorgesehen, dass der Schritt Ermitteln des dreidimensionalen Hüllkörpers für die auf den ersten Daten dargestellten Objekten unter Berücksichtigung der gebildeten Gruppen und der empfangenen Informationsdaten der zweidimensionalen umgebenden Polygone ein Verschieben und/oder Skalieren des dreidimensionalen Hüllkörpers innerhalb eines vordefinierten Grenzwertes dergestalt umfasst, dass die gebildeten Gruppen an dreidimensionalen Datenpunkten vollständig vom dreidimensionalen Hüllkörper eingeschlossen sind. In anderen Worten kann durch Verschieben und/oder Skalieren des dreidimensionalen Hüllkörpers erreicht werden, dass möglichst alle zu einer Gruppe zugeordneten Datenpunkte der ersten Daten sich innerhalb des ermittelten Hüllkörpers befinden. Bevorzugterweise werden auch lokale Informationen der ersten Daten - wie eine lokale Punktdichte der ersten Daten verwenden, um dem Sensor zugewandte Flächen der Objekte in den ersten Daten zu identifizieren - und diese zu nutzen, um den dreidimensionalen Hüllkörper möglichst dicht an diese zur Fläche zählenden dreidimensionalen Datenpunkte heranzuschieben.

Die Aufgabe der Erfindung wird zudem durch eine Vorrichtung zur Datenverarbeitung umfassend Mittel zur Ausführung des obigen beschriebenen Verfahrens gelöst.

Weiterhin betrifft die Erfindung ein Computerprogrammprodukt, umfassend Befehle, die bei der Ausführung des Programms durch einen Computer diesen veranlassen, das obige beschriebene Verfahren auszuführen.

Ferner wird erfindungsgemäß ein computerlesbarer Datenträger, bevorzugt ein nichtflüchtiger computerlesbarer Datenträger, bereitgestellt, auf dem das obige Computerprogrammprodukt gespeichert ist.

Die technischen Vorteile der Vorrichtung zur Datenverarbeitung, des Computerprogrammproduktes und des computerlesbaren Datenträgeres ergeben sich für den Fachmann durch die Beschreibung des Verfahrens zum Zuordnen von Datenpunkten von ersten Daten zu jeweils einem von mehreren Objekten, sowie durch die nachfolgend beschriebenen Ausführungsbeispiele.

In der Zeichnung zeigen
- Fig. 1: schematisch projizierte Daten, die in einem computerimplementierten Verfahren zum Zuordnen von Datenpunkten von ersten Daten zu jeweils einem von mehreren Objekten, gemäß einem bevorzugten Ausführungsbeispiel der Erfindung, generiert wurden,
- Fig. 2: schematisch ein Histogramm, das aus den in Figur 1 dargestellten projizierten Daten beim Verfahren gemäß einem bevorzugten Ausführungsbeispiel der Erfindung gebildet wird,
- Fig. 3: schematisch zwei sich überlappende Polygone, die in dem computerimplementierten Verfahren zum Zuordnen von Datenpunkten von ersten Daten zu jeweils einem von mehreren Objekten, gemäß einem weiteren bevorzugten Ausführungsbeispiel der Erfindung, empfangen werden,
- Fig. 4: schematisch projizierte Daten zu den in Figur 3 dargestellten überlappenden Polygonen, und
- Fig. 5: schematisch eine Darstellung des Vorganges, der bei einem Zuordnen einer Distanzinformation zu den jeweils gebildeten Gruppen des Verfahrens gemäß einem bevorzugten Ausführungsbeispiel der Erfindung verwendet wird.

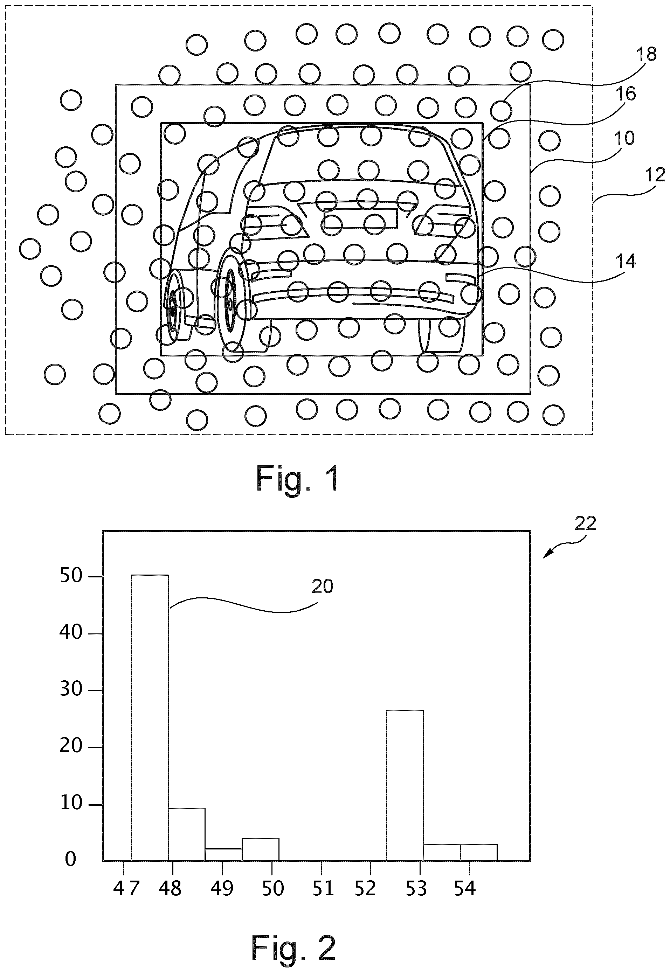

Figur 1 zeigt schematisch einen beispielhaften Schritt in einem computerimplementierten Verfahren zum Zuordnen von Datenpunkten von ersten Daten zu jeweils einem von mehreren Objekten, gemäß einem bevorzugten Ausführungsbeispiel der Erfindung.

In dem Verfahren werden in einem ersten Schritt Informationsdaten von zweidimensionalen umgebenden Polygonen 10, 16, vorliegend von zweidimensionalen umgebenden Rechtecken 10, 16, für ein auf zweiten Daten 12 dargestellten Objekt 14, empfangen. Wie in Figur 1 ersichtlich ist, handelt es sich bei den zweiten Daten 12 um Bilddaten 12, die zwei Raumdimensionen aufweisen und von einer Kamera aufgezeichnet wurden. Im vorliegenden Ausführungsbeispiel wurden zunächst Informationsdaten eines zweidimensionalen minimal umgebenden Polygons 16 empfangen. Das minimal umgebende Polygon 16 wurde dann skaliert mit einem Faktor größer 1, vorliegend mit dem Faktor 1,25 um das umgebende Polygonen 10 zu erhalten.

Die empfangenen Informationsdaten des Polygons 10 definieren vorliegend die Größe und Position des Polygons 10 in den Bilddaten 12. Weiterhin wird ein Klassifizierungsergebnis des auf den Bilddaten 12 dargestellten Objektes 16 empfangen. Im vorliegenden Ausführungsbeispiel wurde das auf den Bilddaten 12 dargestellte Objekt 16 der Klasse PKW-Fahrzeug zugeordnet.

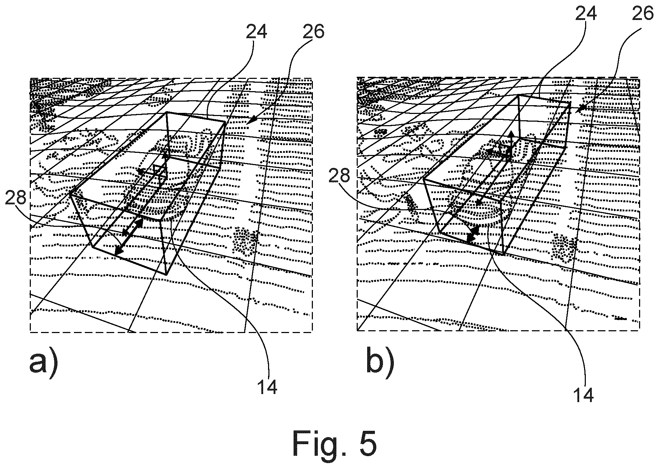

Weiterhin wird in dem Verfahren eine Projektionsmatrix empfangen, wobei die Projektionsmatrix eine Abbildung eines dreidimensionalen Datenpunktes von ersten Daten 26 (nicht in Figur 1 bis 4 gezeigt, aber in Figur 5) auf einen zweidimensionalen Datenpunkt in den zweiten Daten 12 definiert.

Bei den ersten Daten 26 handelt es sich vorliegend um Lidar-Sensor-Daten, die zeitlich korreliert zu den von der Kamera aufgezeichneten Bilddaten 12 sind. Die Lidar-Sensor-Daten weisen drei Raumdimensionen auf. Mittels der Projektionsmatrix und den Lidar-Sensor-Daten lassen sich in einem weiteren Schritt des Verfahrens projizierte Datenpunkte 18 genieren, die in Figur 1 dargestellt sind.

In einem weiteren Schritt des Verfahrens werden die projizierten Datenpunkte 18 in Tiefen-Klassen 20 eingeteilt, und zwar aufgrund des jeweiligen Tiefenwertes der ursprünglichen dreidimensionalen Datenpunkte 26.

Im darauffolgenden Schritt werden Gruppen der projizierten Datenpunkte 18 gebildet und zwar unter Berücksichtigung der empfangenen Informationsdaten der zweidimensionalen umgebenden Polygone 10 und der Tiefen-Klasse 20 des Datenpunktes 18.

In einer Situation wie sie in Figur 1 gezeigt ist, in der keine sich überlappende Polygone 10 von mehreren Objekten 14 vorhanden sind, ist vorgesehen, dass die Gruppen von projizierten Datenpunkten 18 gebildet werden, indem für diejenigen projizierten Datenpunkte 18, die sich innerhalb eines jeweiligen Polygons 10 befinden, die Häufigkeitsverteilung 22 der Tiefenwerte betrachtet wird, und dem jeweiligen Polygon 10 diejenige Tiefen-Klasse 20 zugewiesen wird, die in der Häufigkeitsverteilung 22 des entsprechenden Polygons 10 ein Maximum aufweist. Wie in Figur 2 gezeigt wird bildlich gesprochen also mit den projizierten Datenpunkten 18, die sich innerhalb des Polygons 10 befinden, ein Histogramm 22 gebildet. Im vorliegenden Ausführungsbeispiel wird dem Polygon 10 also die Tiefen-Klasse 20 zugewiesen, die einen Tiefen-klassenbreite von 47 Meter bis 48 Meter aufweist.

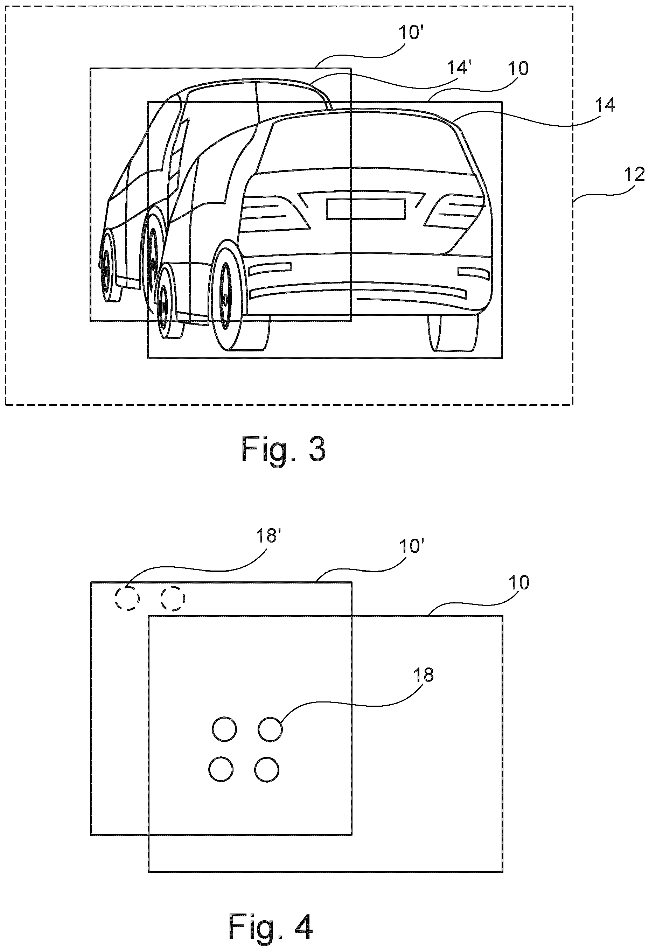

Figuren 3 und 4 illustrieren das Vorgehen, bei mehreren Objekten 14, 14`. Wie in Figur 3 ersichtlich, weisen die Bilddaten 12 vorliegend zwei Objekte 14 und 14' auf. Der PKW 14 verdeckt dabei anteilig den Lieferwagen 14`. Zudem zeigt Figur 3 die zweidimensionalen umgebenden Polygone 10 und 10' für die Objekte 14, 14`. In Figur 3 sind der übersichthalber nicht die projizierten Datenpunkte 18 eingezeichnet.

Wenn in solch einer Situation mit sich überlappenden Polygonen 10, 10' das Histogramm 22 wie in Figur 1 und 2 für jedes Polygon 10, 10' einzeln erstellt würde, und dann der Maximalwert der Häufigkeitsverteilung 22 dem Polygon 10, 10' zugeordnet würde, würde dies dazu führen, dass beiden Polygonen 10, 10' die gleiche Tiefen-Klasse 20 zugewiesen würde, da die Mehrheit der projizierten Datenpunkte 18, 18`, die innerhalb des Polygons 10' liegen, von dem Objekt 14 - dem PKW - stammen und nicht vom Objekt 14' dem Lieferwagen.

Das Verfahren sieht nun also vor, dass die Gruppen von projizierten Datenpunkten 18, 18` mittels eines Zuordnungsverfahrens dergestalt gebildet werden, dass bei sich überlappenden Polygonen 10, 10', bei denen Datenpunkte 18, 18` sich innerhalb von mehr als einem zweidimensionalen umgebenden Polygon 10, 10' befinden, die Gruppen derart gebildet werden, dass keine Tiefen-Klasse 20, 20` gleichzeitig mehreren der sich überlappenden Polygonen 10, 10' zugewiesen wird. Vorliegend wird als Zuordnungsverfahren die Ungarische Methode verwendet, die die Anzahl an projizierten Datenpunkten 18, 18` innerhalb eines Polygons 10 10' beim Zuordnen maximiert.

Wie Figur 4 illustriert, erfolgt das Zuordnen, indem die sich überlappenden Polygone 10, 10' zu einem Gesamtpolygon vereinigt werden. Die Gruppen von projizierten Datenpunkten 18, 18` werden dann gebildet, indem für diejenigen projizierten Datenpunkte 18, 18', die sich innerhalb des Gesamtpolygons befinden, die Häufigkeitsverteilung der Tiefenwerte betrachtet wird.

Figur 4 illustriert dies mit zwei sich überlappenden Polygonen 10, 10' und zwei verschiedenen Tiefen-Klassen 20, 20' der projizierten Datenpunkte 18, 18`, wobei der projizierte Datenpunkt 18 der Tiefen-Klasse 20 zugehörig ist und der projizierte Datenpunkt 18` der Tiefen-Klasse 20`. Das Zuordnungsproblem, das vorliegend mit der Ungarischen Methode gelöst wird, lässt sich anhand einer Matrix darstellen. Die Daten des Zuordnungsproblems werden in einer quadratischen Matrix gesammelt. Jeder Zeile entspricht dabei eine Quelle - vorliegend also ein Polygon 10, 10', jeder Spalte ein Ziel - vorliegend also eine Tiefen-Klasse 20, 20', und jede Matrixkomponente enthält die Bewertung der Zuordnung - vorliegend also die Anzahl an projizierten Datenpunkten 18, 18'.

Für das in Figur 4 dargestellte Zuordnungsproblem ergibt sich also folgende Matrix:

| | Tiefen-Klasse 20 | Tiefen-Klasse 20' |
|---|---|---|
| Polygon 10 | 4 | 0 |
| Polygon 10' | 4 | 2 |

Ein Eintrag in dieser Matrix an der Stelle (Zeile, Spalte) zählt, wie viele Punkte mit einem Tiefenwert, die in die Tiefen-Klasse 20, 20` fällt, in dem Polygon 10, 10' sind. Jedes Polygon 10, 10' bekommt dann eine Tiefen-Klasse 20, 20` zugewiesen und jede Tiefen-Klasse 20, 20' kann nur einmal zugewiesen werden.

Das Ziel ist, dass die Summe der Matrix Einträge, die der Zuweisung entsprechen, maximal ist. In diesem Fall wird dazu dem Polygon 10 die Tiefen-Klasse 20 und dem Polygon 10' die Tiefen-Klasse 20' zuweisen. Die Ungarische Methode findet diese optimale Zuweisung. Wenn die Polygone 10, 10' einzeln betrachtet würden, dann würden beide die Tiefen-Klasse 20 zugewiesen bekommen.

Diejenigen Datenpunkte 18, 18` die sich innerhalb der dem Polygon 10, 10' zugewiesenen Tiefen-Klasse 20, 20` befinden, bilden dann die Gruppe der dem jeweiligen Objekt zugeordneten projizierten Datenpunkten 18, 18`.

In einem weiteren Schritt des Verfahrens wird danach der Gruppe genau eine Distanzinformation zugeordnet. Dies erfolgt im vorliegenden Ausführungsbeispiel, indem der Mittelwert über die jeweiligen Tiefenwerte der ursprünglichen dreidimensionalen Datenpunkte 26 der den jeweiligen Objekten 14 zugeordneten Gruppe gebildet wird. Die zugeordnete Distanzinformation wird im vorliegenden Ausführungsbeispiel im Folgenden genutzt, um einen dreidimensionalen Hüllkörper 24 (siehe Figur 5) für das auf den ersten Daten 26 dargestellte Objekt 14 zu ermitteln.

Zudem wird, wie in Figur 5 schematisch gezeigt, beim Zuordnen der Distanzinformation zu den jeweils gebildeten Gruppen ein von dem Klassifizierungsergebnisses des Objekts 14 abhängiger Vorwissens-Terms berücksichtigt. Wie in Figur 5a) schematisch dargestellt werden Objekte 14 aufgrund ihrer Eigenverschattung nur auf Flächen vom Sensor abgetastet, die in Richtung des Sensors ausgerichtet sind. In anderen Worten fehlen also quasi Datenpunkte vom Objekt 14, die weiter vom Sensor entfernt liegen. Wenn die auf Basis des beschriebenen Verfahrens gefundene Distanzinformation für einen Schwerpunkt des dreidimensionalen Hüllkörpers 24 verwendet wird, kann dies aufgrund der "fehlenden Datenpunkte" zu einem systematischen Fehler führen. Dieser systematische Fehler ist in Figur 5a) an der relativ großen Distanz 28 zwischen der Vorderfläche des dreidimensionalen Hüllkörpers 24 und den Datenpunkten des Objektes 14 illustriert. Um diesen Fehler auszugleichen, ist in diesem Ausführungsbeispiel vorgesehen, dass der Vorwissens-Term zur Distanzinformation addiert wird. Wie in Figur 5b) gezeigt verringert sich dadurch die Distanz 28 zwischen der Vorderfläche des dreidimensionalen Hüllkörpers 24 und den Datenpunkten des Objektes 14.

### Bezugszeichenliste

- 10: zweidimensionales umgebendes Polygon
- 12: zweite Daten, Bilddaten
- 14: Objekt
- 16: minimal umgebendes Polygon
- 18: projizierter zweidimensionaler Datenpunkt
- 20: Tiefen-Klasse
- 22: Histogramm, Häufigkeitsverteilung
- 24: 3-dimensionaler Hüllkörper
- 26: erste Daten, Lidar-Sensor-Daten
- 28: Distanz

## Patentansprüche

1. Computerimplementiertes Verfahren zum Zuordnen von Datenpunkten von ersten Daten (26) zu jeweils einem von mehreren Objekten (14, 14'), wobei die ersten Daten (26) wenigstens drei Raumdimensionen umfassen, mit den Schritten
- Empfangen von Informationsdaten von zweidimensionalen umgebenden Polygonen (10, 10'), bevorzugt von zweidimensionalen umgebenden Rechtecken (10, 10'), für die auf zweiten Daten (12) dargestellten Objekten (14, 14'), wobei die zweiten Daten (12) wenigstens zwei Raumdimensionen umfassen, wobei die empfangenen Informationsdaten eine Größe und eine Position des umgebenden Polygons (10, 10') des jeweiligen Objektes (14, 14') in den zweiten Daten (12) definieren,
- Empfangen einer Projektionsmatrix, wobei die Projektionsmatrix eine Abbildung eines dreidimensionalen Datenpunktes der ersten Daten (26) auf einen zweidimensionalen Datenpunkt in den zweiten Daten (12) definiert,
- Generieren von projizierten Datenpunkten (18, 18') durch projizieren der dreidimensionalen Datenpunkte der ersten Daten (26) mittels der empfangenen Proj ektionsmatrix,
- Einteilen der projizierten Datenpunkte (18, 18') und/oder der dreidimensionalen Datenpunkte in Tiefen-Klassen (20, 20') aufgrund eines jeweiligen Tiefenwertes des dreidimensionalen Datenpunktes,
- Bilden von den jeweiligen Objekten (14, 14') zugeordneten Gruppen von projizierten Datenpunkten (18, 18') unter Berücksichtigung der empfangenen Informationsdaten der zweidimensionalen umgebenden Polygone (10, 10') und der Tiefen-Klasse (20, 20') des Datenpunktes mittels eines Zuordnungsverfahrens dergestalt, dass bei sich überlappenden Polygonen (10, 10'), bei denen projizierte Datenpunkte (18, 18') sich innerhalb von mehr als einem zweidimensionalen umgebenden Polygon (10, 10') befinden, die Gruppen derart gebildet werden, dass keine Tiefen-Klasse (20, 20') gleichzeitig mehreren der sich überlappenden Polygonen (10, 10') zugewiesen wird.

2. Verfahren nach Anspruch 1, wobei es sich bei den ersten Daten (26) um eine mittels eines Lidar- oder Radar- Sensors aufgezeichnete Punktwolke handelt und/oder wobei es sich bei den zweiten Daten (12) um mittels einer Kamera aufgezeichnete Bilddaten handelt.

3. Verfahren nach einem der vorhergehenden Ansprüche, wobei der Schritt Empfangen von Informationsdaten eines zweidimensionalen umgebenden Polygons (10, 10') ein Empfangen von Informationsdaten eines zweidimensionalen minimal umgebenden Polygons (16), und bevorzugt eines zweidimensionalen minimal umgebenden Rechteckes (16), und ein Skalieren des minimal umgebenden Polygons (16) um einen Faktor größer 1 und bevorzugt kleiner gleich 1,5 umfasst, und/oder wobei der Schritt Empfangen von Informationsdaten eines zweidimensionalen umgebenden Polygons (10, 10') ein Empfangen von Informationsdaten eines um einen Faktor größer 1 und bevorzugt kleiner gleich 1,5 skaliertes zweidimensional minimal umgebenden Polygons (16) umfasst.

4. Verfahren nach einem der vorhergehenden Ansprüche, wobei der Schritt Einteilen der projizierten Datenpunkte (18, 18') und/oder der dreidimensionalen Datenpunkte in Tiefen-Klassen (20, 20') aufgrund des jeweiligen Tiefenwertes des dreidimensionalen Datenpunktes, ein Einteilen der projizierten Datenpunkte (18, 18') und/oder der dreidimensionalen Datenpunkte in Tiefen-Klassen (20, 20') mit gleichartiger Klassenbreite umfasst.

5. Verfahren nach einem der vorhergehenden Ansprüche, wobei der Schritt Bilden von den jeweiligen Objekten (14, 14') zugeordneten Gruppen von projizierten Datenpunkten (18, 18') unter Berücksichtigung der empfangenen Informationsdaten der zweidimensionalen umgebenden Polygone (10, 10') und der Tiefen-Klasse (20, 20') des Datenpunktes mittels der Ungarischen Methode erfolgt.

6. Verfahren nach einem der vorhergehenden Ansprüche, wobei der Schritt Bilden von den jeweiligen Objekten (14, 14') zugeordneten Gruppen von projizierten Datenpunkten (18, 18') unter Berücksichtigung der empfangenen Informationsdaten der zweidimensionalen umgebenden Polygone (10, 10') und der Tiefen-Klasse (10, 10') des Datenpunktes ein Bilden von Gruppen dergestalt umfasst, dass kein projizierter Datenpunkt (18, 18') gleichzeitig mehreren Gruppen zugewiesen wird.

7. Verfahren nach einem der vorhergehenden Ansprüche, wobei das Verfahren den Schritt Zuordnen einer Distanzinformation, und bevorzugt genau einer Distanzinformation, zu den jeweils gebildeten Gruppen umfasst.

8. Verfahren nach dem vorherigen Anspruch, wobei der Schritt Zuordnen einer Distanzinformation zu den jeweils gebildeten Gruppen ein Bilden eines Mittelwertes über die jeweiligen Tiefenwerte der dreidimensionalen Datenpunkte der den jeweiligen Objekten (14, 14') zugeordneten Gruppe umfasst.

9. Verfahren nach einem der zwei vorherigen Ansprüche, wobei der Schritt Zuordnen einer Distanzinformation zu den jeweils gebildeten Gruppen ein Addieren eines von einem Klassifizierungsergebnisses des Objekts (14, 14') abhängigen Vorwissens-Terms umfasst, und das Verfahren bevorzugt den Schritt Empfangen eines Klassifizierungsergebnisses des Objektes (14, 14') umfasst.

10. Verfahren nach einem der vorhergehenden Ansprüche, wobei das Verfahren den Schritt Ermitteln eines dreidimensionalen Hüllkörpers (24), bevorzugt eines Quaders (24), für die auf den ersten Daten (26) dargestellten Objekten (14, 14') unter Berücksichtigung der gebildeten Gruppen, bevorzugt der zugeordneten Distanzinformation, und der empfangenen Informationsdaten der zweidimensionalen umgebenden Polygone (10, 10') umfasst.

11. Verfahren nach dem vorhergehenden Anspruch, wobei der Schritt Ermitteln des dreidimensionalen Hüllkörpers (24) für die auf den ersten Daten (26) dargestellten Objekten (14, 14') unter Berücksichtigung der gebildeten Gruppen und der empfangenen Informationsdaten der zweidimensionalen umgebenden Polygone (10, 10') ein Verschieben und/oder Skalieren des dreidimensionalen Hüllkörpers (24) innerhalb eines vordefinierten Grenzwertes dergestalt umfasst, dass die gebildeten Gruppen an dreidimensionalen Datenpunkten vollständig vom dreidimensionalen Hüllkörper (24) eingeschlossen sind.

12. Vorrichtung zur Datenverarbeitung umfassend Mittel zur Ausführung des Verfahrens nach einem der Ansprüche 1 bis 11.

13. Computerprogrammprodukt, umfassend Befehle, die bei der Ausführung des Programms durch einen Computer diesen veranlassen, das Verfahren nach einem der Ansprüche 1 bis 11 auszuführen.

14. Computerlesbaren Datenträger, auf dem das Computerprogrammprodukt nach Anspruch 13 gespeichert ist.
